# EUROPÄISCHE PATENTSCHRIFT

(11) **EP 0 807 025 B1**
(45) Veröffentlichungstag und Bekanntmachung des Hinweises auf die Patenterteilung: **31.05.2000**
(21) Anmeldenummer: 96903880.1
(22) Anmeldetag: 06.02.1996
(51) Int. Cl.: B60B 3/16, B60B 3/02, B60B 3/04

(54) **FAHRZEUGRAD UND VERFAHREN ZUR HERSTELLUNG DESSELBEN**
VEHICLE WHEEL AND METHOD OF PRODUCING THE SAME
ROUE DE VEHICULE ET PROCEDE POUR SA FABRICATION

(30) Priorität: 08.02.1995 DE 19505782; 26.01.1996 DE 19603968
(43) Veröffentlichungstag der Anmeldung: 19.11.1997
(73) Patentinhaber: Michelin Kronprinz Werke GmbH, 42697 Solingen (DE)
(72) Erfinder: DUNING, Ralf, D-42719 Solingen (DE); GOHRBANDT, Uwe, D-42781 Haan (DE); DÄFLER, Hans-Joachim, D-40699 Erkrath (DE)
(74) Vertreter: Meissner, Peter E., Dipl.-Ing.
(86) Internationale Anmeldenummer: DE9600260
(87) Internationale Veröffentlichungsnummer: WO9624497

(56) Entgegenhaltungen:
- EP-A- 0 054 931
- FR-A- 2 539 079
- US-A- 3 664 708

## Beschreibung

Die Erfindung betrifft ein Fahrzeugrad gemäß dem Oberbegriff des Patentanspruches 1.

Bei der Montage eines Fahrzeugrades bestehend aus einer Felge und einer damit verbundenen Radscheibe oder Radschüssel an das Fahrzeug wird die Radscheibe bzw. die Radschüssel mittels Radschrauben kraftschlüssig mit der Nabe oder der Bremstrommel verbunden. Die Radschrauben werden mittels Drehmomentenschlüssel angezogen, um eine definierte, ausreichend große Schraubenlängskraft zu erzeugen. Die Größe der erforderlichen Schraubenlängskraft wird u. a. durch die Anzahl der Schrauben, den Reibdurchmesser der Anlagenflächen, die Reibwerte zwischen den Verbindungselementen und die zu übertragende Antriebs- bzw. Bremsmomente bestimmt. Der erforderlichen Schraubenlängskraft wird ein Sicherheitszuschlag überlagert, der die beim Abrollen des Rades auf die Schraube einwirkenden Kräfte berücksichtigt.

Über die Schraubenlängskraft wird das Anschlußauge bzw. Versenk des Rades mit der Nabe oder der Bremstrommel verspannt. Das Versenk hat dabei die Aufgabe, der Schraubenlängskraft bis hin zu erhöhten Werten, wie sie durch Mißbrauch, wie z. B. geölte Schrauben oder zu hohe Anzugsdrehmomente entstehen, einen elastischen Widerstand entgegenzusetzen, da ein plastisches Fließen zu einem Abfall der Schraubenlängskraft und damit letztendlich zu einem Lockern der Radschrauben führen würde.

Bekannte Ausführungen von Anschlußaugen beziehen ihre Federsteifigkeit in Richtung der Schraubenlängsachse aus einer Biegung des ringförmig um das Versenk angeordneten Materials. Zur Erhöhung der Federsteifigkeit gegenüber der aus der normalen Blechdicke sind konstruktive Versteifungen bekannt. Eine der Möglichkeiten besteht darin, den radial einwärts liegenden Bereich des Anschlußauges nach innen zu stülpen. Diese Form hat außerdem den Vorteil, die Kontaktfläche zum Radbolzen gegenüber einfachen Ausstülpungen nach außen zu vergrößern. Beispielhaft wird hierzu auf den Räderkatalog Ausgabe 1990/1991 der Mannesmann Kronprinz AG, Seite 28 untere Hälfte verwiesen. Nachteil der bisherigen Ausführungen des Anschlußauges ist eine deutliche Abhängigkeit der Steifigkeit des Anschlußauges von der Blechdicke und der Materialfestigkeit des Ausgangsmaterials.

Aus der US-A-3,664,708 ist ein Rad bekannt, welches aus einer profilierten Felge und einer damit im Tiefbettbereich über Schweißen verbundenen Radschüssel besteht. Zur Vermeidung eines Anrisses des Anschlußauges bei zu starkem Anziehen der Radschrauben, wird vorgeschlagen, eine krempenartig ausgebildete Buchse im Anschlußauge anzuordnen. Der krempenartig ausgebildete Bereich der Buchse liegt auf der der Nabe bzw. Bremstrommel zugewandten Seite und muß vor der Montage des Rades durch das Anschlußauge gesteckt werden. Nach dem Aufstecken des Rades wird durch das Anziehen der Radmutter ein Kegel des vorderen Bereiches der Buchse angeformt. Dieser Kegel kommt am Randbereich des Anschlußauges zur Anlage, aber erst dann, wenn die Stirnseite des krempenartigen Bereiches der Buchse auf der Nabe bzw. Bremstrommel aufliegt. Nachteilig bei dieser Konstruktion ist, daß gesondert Buchsen hergestellt werden müssen, die bei der Montage des Rades leicht aus dem Anschlußauge herausfallen können, solange der die Buchse fixierende Kegel nicht gebildet ist. Weiterhin ist diese Anordnung nur für Räder mit an der Nabe bzw. Bremstrommel angeordneten Stehbolzen geeignet, da bei der ansonsten üblichen Radschraubenbefestigung die Buchsen bei der Montage leicht herunterfallen können. Von weiterem Nachteil ist, daß die Buchse immer nur für einen Radtyp passend ist, so daß bei hundert verschiedenen Radtypen hundert verschiedene Buchsen hergestellt und lagermäßig vorgehalten werden müssen. Außerdem kann es zu Verwechslungen kommen, so daß die falsche Buchse eingesetzt wird. Von weiterem Nachteil ist, daß durch die zweiteilige Anordnung mindestens zwei Setzspalte erhalten bleiben. Dies ist sehr ungünstig für die Stabilität der Schraubenlängskraft. Darüber hinaus wird bei der Montage die Biegefeder schon stark belastet, da mittels der Radmutter der Kegel der Buchse angeformt wird.

In der FR-A-2539079 ist eine spezielle Radnabenkonstruktion offenbart. In der einzigen Figur ist ein Ausschnitt eines gattungsgemäßen Fahrzeugrades einschließlich eines Bereiches der Radschüssel dargestellt. Die Radschüssel ist mit mehreren über den Umfang des Schraubenlochkreises angeordneten Anschlußaugen für die Schraubenlöcher der Radschrauben versehen. Das Anschlußauge weist ein kegelig ausgebildetes Versenk auf und der das Versenk umfassende Bereich ist nach außen gestülpt. Der das Versenk umfassende Bereich des Anschlußauges weist in allen Querschnittsebenen eine größere Dicke auf als der weiter entfernt liegende Bereich der Radschüssel. Der unmittelbar an das Versenk angrenzende Bereich weist die größte Dicke auf, die dann radial nach draußen von der Achse des Versenkes aus gesehen abnimmt, um dann abgerundet in den angrenzenden Bereich überzugehen. Dieser angrenzende Bereich weist eine nahezu gleichbleibende Dicke auf, die im wesentlichen der Ausgangsdicke der Ronde zur Anformung der Radschüssel entspricht.

Aufgabe der Erfindung ist es, ein gattungsgemäßes Fahrzeugrad bestehend aus einer Felge und einer damit verbundenen metallischen, insbesondere aus Leichtmetall gefertigten Radscheibe oder Radschüssel anzugeben, bei dem bei einfacher Montage sichergestellt ist, daß ein Lockern der Radschrauben während des Fahrbetriebes vermieden wird. Darüber hinaus wird zur Verminderung der Flächenpressung an den Radschrauben eine große Kontaktfläche angestrebt.

Diese Aufgabe wird mit den Merkmalen des kennzeichnenden Teiles des Anspruches 1 gelöst. Vorteilhafte Weiterbildungen sowie ein Verfahren zur Herstellung eines solchen Rades sind Bestandteil von Unteransprüchen.

Erfindungsgemäß weist der das Versenk umfassende Bereich gegenüber einer verfahrensbedingt üblichen Verjüngung eine signifikant größere Dicke auf. Der unmittelbar an das Versenk anschließende Bereich weist die größte Dicke auf, die dann radial nach außen hin kontinuierlich abnimmt, um dann abgerundet bzw. tangential in den Grenzbereich überzugehen. Der letztgenannte Bereich ist dadurch charakterisiert, daß er eine nahezu gleichbleibende Dicke aufweist, die im wesentlichen der Ausgangsdicke der Ronde zur Herstellung der Radscheibe oder Radschüssel entspricht. Durch die gezielte Anstauchung im Versenkbereich wird die Steifigkeit des als Biegefeder wirkenden Anschlußauges erhöht. Außerdem wird der Widerstand gegen ein Aufspreizen des Versenkes beim Anziehen der Radschraube vergrößert. Dadurch kann die übrige Blechdicke auf ein Minimum abgesenkt werden, da die Schwachstelle - Anschlußauge - entsprechend diesem Vorschlag über eine ausreichende Steifigkeit auch unter Berücksichtigung der mißbräuchlichen Anwendung der Radschrauben verfügt. Zur Bildung einer möglichst großen Kontaktfläche zwischen der Radschraube und dem Versenk erfolgt vorzugsweise die Dickenzunahme axial nach außen. Dabei ist aber die Begrenzung durch die vorgeschriebenen Anschlußmaße zu berücksichtigen. In jedem Falle wird durch die Vergrößerung der Kontaktfläche die Flächenpressung zwischen Radschraube und Versenk vermindert. Die vorgeschlagene Ausbildung des Anschlußauges ist anwendbar für alle Räder aus Metall, insbesondere aber für solche aus Leichtmetall, da dieser Werkstoff von Hause aus eine niedrigere Festigkeit mitbringt. Um für Räder aus Leichtmetall die Schwachstelle - Anschlußauge - sicherer zu machen, wird weiterbildend vorgeschlagen, zusätzlich Material axial nach innen zu drücken unter Bildung eines torusförmigen Ringes. Dadurch wird die Federsteifigkeit des Anschlußauges wesentlich erhöht, da neben dem Biegeanteil des umgebenden Bereiches die Steifigkeit des als Druckfeder wirkenden torusförmigen Ringes hinzukommt. Dabei stützt sich beim Anziehen der Radscheibe der Ring auf der Nabe oder Bremstrommel ab. Im nicht verschraubten Zustand weist die Stirnfläche des torusförmigen Ringes gegenüber der Anlagefläche auf der Nabe oder Bremstrommel eine definierte Spalthöhe auf. Dieser Abstand wird zur Abstimmung des Zusammenspiels zwischen Biege- und Druckfeder und damit zur Beeinflussung der Schraubenlängskraft des Anzugsdrehmomentes verwendet.

Dieser torusförmige Ring hat den Vorteil, daß eine plastische Verformung des auf Biegung beanspruchten Bereiches vermieden wird und über die geometrische Ausbildung des Ringes eine Federsteifigkeit weitgehend unabhängig vom eingesetzten Material hinsichtlich seiner Festigkeit und Dicke eingestellt werden kann. Dabei hat es sich als vorteilhaft erwiesen, wenn der torusförmige Ring von einer ringförmigen Nut oder einer abgerundeten Ausnehmung umgeben ist. Die letztgenannte Variante bietet sich insbesondere bei Stahlrädern an, da dadurch die Anrißgefahr im Übergangsbereich Nut-Ring vermindert wird.

Die vorgeschlagene Konstruktion ist besonders vorteilhaft für ein aus Blech gefertigtes Leichtmetallrad, ist aber ebenso geeignet für ein Stahlrad oder ein gegossenes Leichtmetallrad. Die erfindungsgemäße Versenkausführung hat den wesentlichen Vorteil, den Wünschen der Automobilindustrie nach möglichst einheitlichen Radschrauben entgegenzukommen, da die Versenksteifigkeit in weiten Bereichen unabhängig von der Höhe des Versenkes und der Ausgangsdicke des Vormaterials abgestimmt werden kann.

Bei der Herstellung des erfindungsgemäßen Fahrzeugrades wird im Unterschied zum bekannten Stand der Technik bei der Bildung des Anschlußauges das auszustanzende Materialvolumen verringert und das auf diese Weise eingesparte Material durch ein optimiertes Drücken und Stülpen bei gleichzeitigem variablen Entgegenhalten aus dem späteren Versenk in den angrenzenden Bereich anstauchend verdrängt. Bei der Bildung des torusförmigen Ringes insbesondere bei der Herstellung von Leichtmetallrädern wird zusätzlich durch ein axiales Pressen Material axial nach innen gedrückt.

In der Zeichnung wird anhand einiger Ausführungsbeispiele das erfindungsgemäße Fahrzeugrad näher erläutert.

Es zeigen:
- Figur 1: im Querschnitt einen Teilausschnitt einer nur zur Erläuterung der Erfindung dienenden Ausführungsform eines Fahrzeugrades im Bereich des Anschlußauges
- Figur 2: im gleichen Querschnitt wie Fig. 1 eine zweite Ausführungsform
- Figur 3: im gleichen Querschnitt wie Fig. 2 eine dritte Ausführungsform
- Figur 4: wie Fig. 2 in Kombination mit einer Radschraube und der Nabe oder Bremstrommel
- Figur 5a: eine Draufsicht der Außenseite der Radschüssel
- Figur 5b: einen Schnitt A-A in Fig. 5a
- Figur 5c: einen Schnitt B-B in Fig. 5b

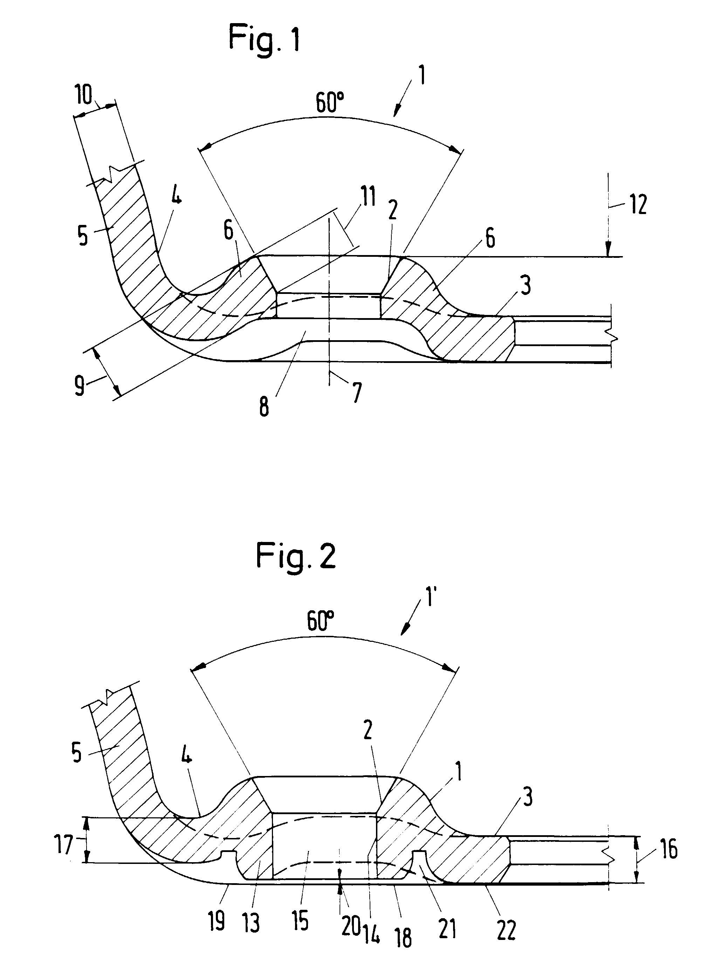

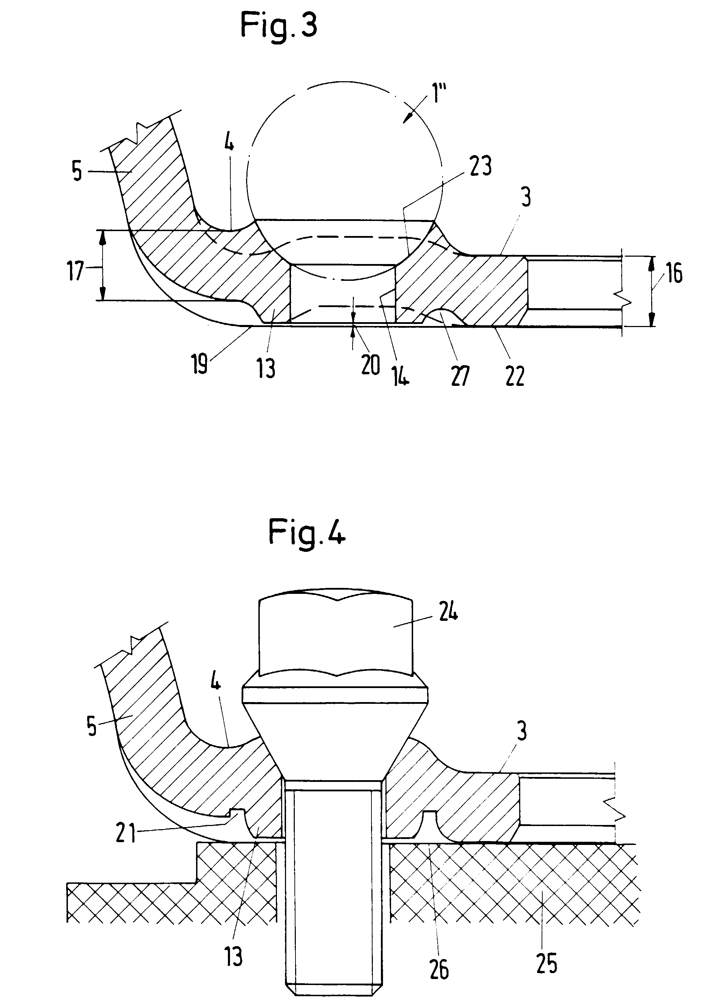

Figur 1 zeigt im Querschnitt einen Teilausschnitt eines Fahrzeugrades im Bereich des Anschlußauges 1. Das Anschlußauge 1 weist ein kegelig ausgebildetes Versenk 2 mit einem Öffnungswinkel des Kegels von b ispielsweise 60° auf. Das Anschlußauge 1 ist in bekannter Weise über den Grenzbereich 3,4 hinaus nach außen gestülpt. Ein Teil des sich anschließenden Teiles der Radschüssel 5 ist hier angedeutet. Erfindungsgemäß weist der das Versenk umfassende Bereich 6 eine signifikant größere Dicke auf als der die Radschüssel 5 bildende Bereich. Dabei weist der unmittelbar an das Versenk 2 anschließende Bereich die größte Dicke auf, die dann radial nach außen von der Achse 7 des Versenkes 2 aus gesehen kontinuierlich abnimmt, um dann abgerundet ggf. tangential in den Grenzbereich 3,4 überzugehen. Die etwas unterhalb des Anschlußauges 1 gestrichelten bzw. durchgezogenen Linien zeigen beispielhaft den Bereich der Radscheibe bzw. Radschüssel 8, der in Umfangsrichtung gesehen zwischen zwei Anschlußaugen 1 liegt. Die Dicke 9 im unmittelbaren Bereich des Versenkes 2 liegt mindestens um 15 vorzugsweise um mehr als 25% höher im Vergleich zu der Dicke 10 des Bereiches, der die Radschüssel 5 bildet. Neben der Erhöhung der Steifigkeit des Anschlußauges 1 bewirkt die erfindungsgemäße Materialanstauchung im Versenkbereich eine Vergrößerung der Kontaktfläche 11 mit der Radschraube (siehe auch hierzu Fig. 4). Aus diesem Grunde ist die Dickenzunahme vorzugsweise axial nach außen gerichtet, wobei aber die vorgeschriebenen Anschlußmaße, hier angedeutet durch den Pfeil 12, zu beachten sind.

Figur 2 zeigt im gleichen Querschnitt wie Fig. 1 eine erste Ausführungsform der Erfindung, wobei für gleiche Teile gleiche Bezugszeichen gewählt worden sind. Im Unterschied zu Fig. 1 weist das Anschlußauge 1' zusätzlich einen nach innen gerichteten torusförmigen Ring 13 auf, der radial einwärts durch den zylindrischen Teil 14 des Schraubenloches 15 begrenzt wird. dessen Erstreckung erfindungsgemäß größer sein kann, als die in axialer Richtung liegende Materialdicke 16,17 der angrenzenden Bereiche 3,4. Die Stirnfläche 18 des torusförmigen Ringes 13 weist gegenüber der radial auswärts liegenden Anlagefläche 19 im nicht verschraubten Zustand eine definierte Spalthöhe 20 auf, mit der der Einsatzpunkt des als Druckfeder wirkenden Ringes 13 gegenüber dem als Biegefeder wirkenden umgebenden Bereich 3,4 abgestimmt werden kann. Die Federsteifigkeit des torusförmigen Ringes 13 wird im wesentlichen durch das als Feder herangezogene Materialvolumen bestimmt, das beispielhaft durch Breite und Tiefe der Ringnut 21 festgelegt werden kann. Bei der Montage und dem anschließenden Anziehen der Radschraube 24 (siehe Figur 4) liegt zuerst die radial auswärts angeordnete Anlagefläche 19 an der Kontaktfläche 26 der Nabe 25 an. Bei Erhöhung des Anzugsdrehmomentes der Radschraube 24 bis auf den üblicherweise vom Fahrzeughersteller festgelegten Wert, legt sich dann im weiteren die radial innenliegende Anlagefläche 22 an die Kontaktfläche 26 der Nabe 25 (siehe Figur 4) an. Ab diesem Zeitpunkt wirkt der umgebende Bereich 3,4 des Anschlußauges 1' als Biegefeder, bis die Stirnfläche 18 mit der Kontaktfläche der Nabe 25 in Kontakt kommt und der torusförmige Ring 13 zusätzlich als Druckfeder wirkt. Die in dieser Figur 2 dargestellte Ausführungsform wird vorzugsweise für Leichtmetallräder angewandt, um an der Schwachstelle Anschlußauge 1' die vom Werkstoff her geringere Festigkeit zu kompensieren.

Figur 3 zeigt im gleichen Querschnitt wie in Figur 2 eine zweite Ausführungsform des erfindungsgemäßen Bereiches. Dabei sind ebenfalls für gleiche Teile gleiche Bezugszeichen verwendet worden. Im Unterschied zu Figur 2 ist das Versenk 23 kugelig ausgebildet. Die grundlegende Anordnung und die Wirkungsweise der erfindungsgemäßen Ausführung des Anschlußauges 1' sind die gleichen wie zuvor beschrieben. Etwas anders gestaltet ist aber der Übergang vom torusförmigen Ring 13 zu den benachbarten Bereichen 3,4. Statt einer ausgeprägten Ringnut 21 (Fig. 2) ist bei dieser Ausführungsform eine mehr oder weniger abgerundete Ausnehmung 27 vorgesehen. Vorzugsweise findet diese Ausführungsform Anwendung bei Stahlrädern.

Figur 4 ist von der Ausführungsform her identisch mit Figur 2, zeigt aber das Zusammenwirken des erfindungsgemäßen Anschlußauges der Radscheibe oder Radschüssel 5 mit einer Radschraube 24 und einem Teil der Nabe bzw. Bremstrommel 25. Der dargestellte Zustand zeigt den Moment, in dem die radial auswärts liegende Anlagefläche 19 in Kontakt mit der Kontaktfläche 26 der Nabe 25 ist, aber noch keine Schraubenlängskraft wirkt. Erst durch das eigentliche Festziehen der Radschraube 24 mit einem Schrauber oder Drehmomentenschlüssel kommt es zu dem abgestuften Kontakt der einzelnen Flächenbereiche mit der Kontaktfläche 26 der Nabe 25.

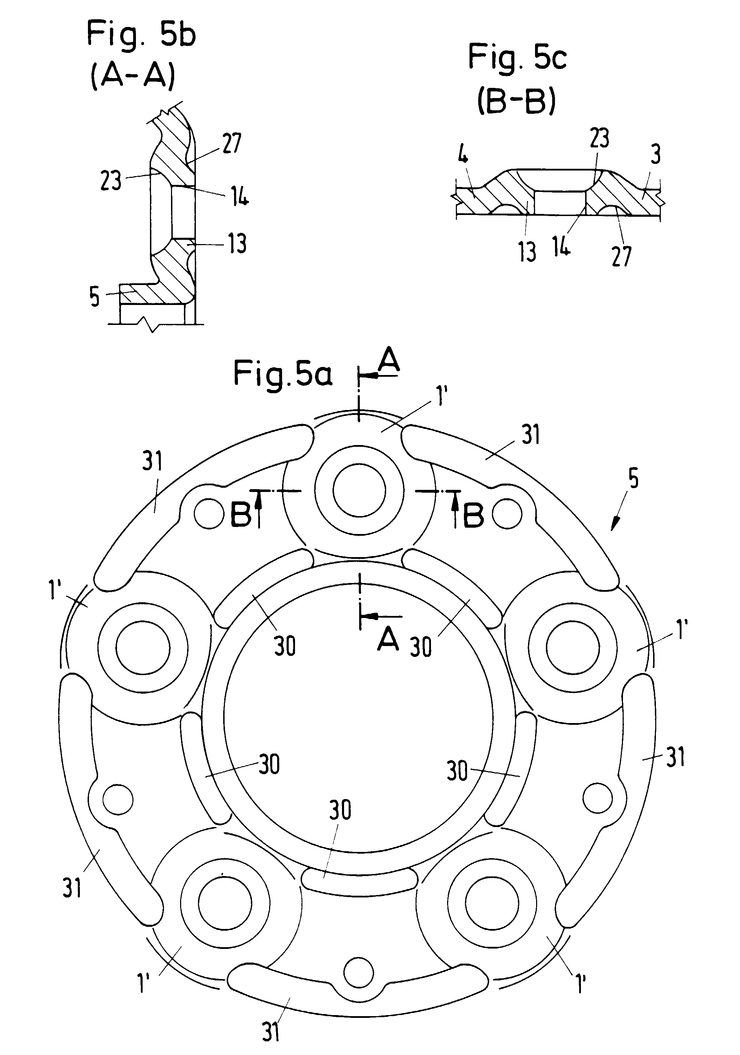

In den Figuren 5a - 5c sind eine Draufsicht sowie zwei Schnitte des erfindungsgemäßen Fahrzeugrades dargestellt. Dabei zeigt das Teilbild 5a die Außenseite der Radschüssel 5. Die Ausführungsform der Anschlußaugen 1' entspricht dabei im wesentlichen der Darstellung in Figur 3. Deutlich zu erkennen in der Darstellung des Teilbildes 5a sind die ausgeprägten Anlageflächen 30,31. Erfindungsgemäß sind die radial außen liegenden Anlageflächen 31 so nahe wie möglich an das jeweilige Anschlußauge 1' herangezogen. Durch diese Ausprägung wird die Radschraube 24 entlastet. Da der Abstand zwischen Radschraube 24 und wirksamer Anlagefläche 31 gering ist und dadurch der Biegehebelarm verkürzt wird, ergibt sich die gewünschte Entlastung der Radschraube 24.

## Patentansprüche

1. Fahrzeugrad bestehend aus einer Felge und einer damit verbundenen Radscheibe oder Radschüssel (5), die an einer Nabe (25) oder Bremstrommel mit mehreren über dem Umfang des Schraubenlochkreises angeordneten Anschlußaugen (1',1") für die Schraubenlöcher der Radschraube (24) befestigbar ist, wobei die Anschlußaugen (1', 1") ein kugelig oder kegelig ausgebildetes Versenk (2, 23) aufweisen, und der das Versenk (2, 23) umfassende Bereich von der Nabe (25) aus gesehen nach außen gestülpt ist und die Radscheibe oder Radschüssel (5) über den Umfang verteilt angeordnete Anlageflächen (19) für die Nabe (25) oder Bremstrommel aufweist, wobei der das Versenk (2, 23) umfassende Bereich des Anschlußauges (1', 1") in allen Querschnittsebenen eine größere Dicke aufweist als der weiter entfernt liegende, die Radscheibe oder Radschüssel (5) bildende Bereich und der unmittelbar an das Versenk (2, 23) angrenzende Bereich die größte Dicke aufweist, die dann radial nach draußen von der Achse (7) des Versenkes (2,23) aus gesehen abnimmt, um dann in einen Grenzbereich (3,4) überzugehen, der eine nahezu gleichbleibende Dicke aufweist, die im wesentlichen der Ausgangsdicke der Ronde zur Anformung der Radscheibe oder Radschüssel (5) entspricht,
dadurch gekennzeichnet,
daß zusätzlich eine nach innen gerichtete Dickenzunahme vorgesehen ist, die unter Bildung eines in Richtung Nabe (25) oder Bremstrommel sich erstreckenden torusförmigen Ringes 13 charakterisiert ist, der im Kontakt mit der Kontaktfläche (26) der Nabe (25) bzw. Bremstrommel eine Druckfeder mit abstimmbarer Federsteifigkeit bildet, die zusätzlich zu der bekannten Federsteifigkeit aus der Biegung des Grenzbereichs (3, 4) wirksam wird, wobei der torusförmige Ring (13) im nicht verschraubten Zustand einen definierten Spalt (20) zur Nabe (25) bzw. Bremstrommel aufweist mit dessen Größe der Einsatzpunkt der Druckfeder zur Biegefeder bestimmt werden kann.

2. Fahrzeugrad nach Anspruch 1,
dadurch gekennzeichnet,
daß die Federsteifigkeit des als Druckfeder wirkenden torusförmigen Ringes (13) durch die Menge und Ausbildung des zur Federung herangezogenen Materialvolumens weitgehend unabhängig von der Dicke und Festigkeit des Materials abgestimmt werden kann.

3. Fahrzeugrad nach den Ansprüchen 1 und 2,
dadurch gekennzeichnet,
daß um den torusförmigen Ring (13) eine ringförmige Nut (21) angeordnet ist.

4. Fahrzeugrad nach den Ansprüchen 1 und 2,
dadurch gekennzeichnet,
daß um den torusförmigen Ring (13) eine abgerundete nach außen hin flach verlaufende Ausnehmung (27) angeordnet ist.

5. Fahrzeugrad nach den Ansprüchen 1 bis 4,
dadurch gekennzeichnet,
daß die Erstreckung des zylindrischen Abschnittes (14) des Schraubenloches (15) größer ist, als die in axialer Richtung liegende Materialdicke (16,17) der angrenzenden Bereiche (3,4).

6. Fahrzeugrad nach einem der vorhergehenden Ansprüche,
dadurch gekennzeichnet,
daß die Radscheibe oder Radschüssel sowohl auf der radial außen als auch auf der radial innen liegenden Seite über den Umfang verteilt angeordnete Anlageflächen (30,31) aufweist, wobei insbesondere die radial außen liegenden Anlageflächen (31) so nahe wie möglich an das Anschlußauge (1') herangezogen sind.

7. Verfahren zur Herstellung eines Fahrzeugrades nach Anspruch 1, bei dem ausgehend von einer Blechronde spanlos durch mehrere Preßvorgänge die Radscheibe oder Radschüssel (5) angeformt wird und das Anschlußauge (1', 1") durch Kombination von spanlosem Drücken und / oder Stülpen sowie spanendem Ausstanzen hergestellt wird und abschließend die in einem separaten Fertigungsverfahren hergestellte Felge mit der Schüssel (5) verbunden wird,
dadurch gekennzeichnet,
daß zur Bildung des Anschlußauges (1', 1") unter Verringerung des auszustanzenden Materialvolumens für das Versenk (2, 23) durch ein optimiertes Drücken und Stülpen bei gleichzeitigem variablen Entgegenhalten Material aus dem späteren Versenk (2, 23) in den angrenzenden Bereich anstauchend verdrängt wird und durch zusätzliches axiales Pressen Material auch axial nach innen gedrückt wird.

## Claims

1. Vehicle wheel consisting of a rim and a wheel centre web or wheel disc (5) which is connected thereto and which can be secured to a hub (25) or brake drum with a plurality of connecting eyes (1', 1") for the bolt holes of the wheel bolt (24) disposed over the circumference of the bolt hole circle, whereby the connecting eyes (1', 1") exhibit a spherical or conical recess (2, 23), and the area surrounding the recess (2, 23) is flared outwards viewed from the hub (25) and the wheel centre web or wheel disc (5) exhibits contact surfaces (19) for the hub (25) or brake drum distributed over the circumference, whereby the area of the connecting eye (1', 1") surrounding the recess (2, 23) in all the cross-sectional planes exhibits a greater thickness than the more distant area forming the wheel centre web or wheel disc (5) and the area directly adjoining the recess (2, 23) exhibits the greatest thickness which then decreases radially outwards viewed from the axis (7) of the recess (2, 23), and then passes into a boundary area (3, 4) which exhibits an almost constant thickness which essentially corresponds to the starting thickness of the round blank for forming the wheel centre web or wheel disc (5), characterised in that in addition, an inwardly directed increase in thickness is provided which forms a toroidal ring 13 which extends in the direction of the hub (25) or brake drum and in contact with the contact area (26) of the hub (25) or brake drum forms a compression spring with adjustable spring stiffness which becomes effective in addition to the known spring stiffness from the bending of the boundary area (3, 4), whereby in the unbolted state the toroidal ring (13) exhibits a defined gap (20) relative to the hub (25) or brake drum the size of which can be used to determine the starting point of the compression spring in relation to the bending spring.

2. Vehicle wheel according to claim 1, characterised in that the spring stiffness of the toroidal ring (13) acting as a compression spring can be adjusted by the quantity and design of the volume of material used for the springing largely independently of the thickness and strength of the material.

3. Vehicle wheel according to claims 1 and 2, characterised in that an annular groove (21) is disposed around the toroidal ring (13).

4. Vehicle wheel according to claims 1 and 2, characterised in that a rounded hollow (27) running flat outwardly is disposed around the toroidal ring (13).

5. Vehicle wheel according to claims 1 to 4, characterised in that the extension of the cylindrical section (14) of the bolt hole (15) is greater than the material thickness (16, 17) of the adjoining areas (3, 4) in the axial direction.

6. Vehicle wheel according to one of the preceding claims, characterised in that the wheel centre web or wheel disc exhibits contact surfaces (30, 31) distributed over the circumference on both the radially external and radially internal sides, whereby in particular the contact surfaces (31) on the radially external side are run as close as possible to the connecting eye (1').

7. Method for manufacturing a vehicle wheel according to claim 1, in which starting from a round sheet metal blank, the wheel centre web or wheel disc (5) is formed by a plurality of pressing operations without cutting and the connecting eye (1', 1") is produced by a combination of non-cutting pressing and/or flaring and cutting stamping and finally the rim produced in a separate production process is connected to the disc (5), characterised in that to form the connecting eye (1, 1") while reducing the volume of material to be stamped out for the recess (2, 23) through optimised pressing and flaring and simultaneous variable holding, material is forced out of the later recess (2, 23) into the adjoining area and material is also forced axially inwards by additional axial pressing.

## Revendications

1. Roue de véhicule, constituée d'une jante et d'une coque de roue ou disque de roue (5) relié à celle-ci, qui peut être fixé à un moyeu (25) ou tambour de frein par plusieurs oeillets de raccordement (1', 1") agencés sur la périphérie du cercle des trous de vis pour les trous des vis (24) de la roue, les oeillets de raccordement (1', 1") présentant un renfoncement (2, 23) réalisé sous forme sphérique ou conique, et la zone entourant le renfoncement (2, 23) étant emboutie vers l'extérieur, vu à partir du moyeu (25), et la coque de roue ou le disque de roue (5) présentant des surfaces d'appui (19), agencées de façon répartie sur la périphérie, pour le moyeu (25) ou le tambour de frein, la zone entourant le renfoncement (2, 23) de l'oeillet de raccordement (1', 1") présentant, dans tous les plans transversaux, une épaisseur plus grande que la zone plus éloignée formant la coque de roue ou le disque de roue (5) et la zone directement adjacente au renfoncement (2, 23) présentant la plus grande épaisseur qui décroît alors radialement vers l'extérieur à partir de l'axe (7) du renfoncement (2, 23) pour alors passer dans une zone limite (3, 4) qui présente une épaisseur pratiquement constante qui correspond généralement à l'épaisseur de sortie du flan circulaire pour former la coque de roue ou le disque de roue (5), caractérisée en ce que, de plus, il est prévu une augmentation d'épaisseur orientée vers l'intérieur, qui est caractérisée en formant une bague torique (13) s'étendant en direction du moyeu (25) ou du tambour de frein qui, en contact avec la surface de contact (26) du moyeu (25) ou du tambour de frein, forme un ressort de pression ayant une raideur pouvant être accordée, qui, en plus de la raideur de ressort connue, est efficace hors de la courbure de la zone limite (3, 4), la bague torique (13) présentant, dans l'état non vissé, une fente définie (20) par rapport au moyeu (25) ou au tambour de frein dont la taille permet de déterminer le point d'application du ressort de pression par rapport au ressort spiral.

2. Roue de véhicule selon la revendication 1, caractérisée en ce que la raideur de la bague torique (13) agissant comme ressort de pression peut être accordée par la quantité et la conformation du volume de matière utilisée pour la suspension élastique, de façon largement indépendante de l'épaisseur et de la résistance mécanique de la matière.

3. Roue de véhicule selon les revendications 1 et 2, caractérisée en ce qu'une gorge annulaire (21) est prévue autour de la bague torique (13).

4. Roue de véhicule selon les revendications 1 et 2, caractérisée en ce qu'un évidement (27) s'étendant à plat de façon arrondie vers l'extérieur est prévu autour de la bague torique (13).

5. Roue de véhicule selon les revendications 1 à 4, caractérisée en ce que l'extension du tronçon cylindrique (14) du trou de vis (15) est plus grande que l'épaisseur de matière (16, 17), existant en direction axiale, des zones adjacentes (3, 4).

6. Roue de véhicule selon une des revendications précédentes, caractérisée en ce que la coque de roue ou le disque de roue présente, aussi bien sur le côté radialement externe que sur le côté radialement interne, des surfaces d'appui (30, 31) agencées de façon répartie sur la périphérie, en particulier les surfaces d'appui (31) radialement externes étant aussi proches que possible de l'oeillet de raccordement (1').

7. Procédé pour fabriquer une roue de véhicule selon la revendication 1, dans lequel, à partir d'un flan de tôle, il est formé, sans enlèvement de matière, la coque de roue ou le disque de roue (5) par plusieurs processus de pressage et l'oeillet de raccordement (1', 1") est réalisé par combinaison de pressage et/ou emboutissage sans enlèvement de matière ainsi que par poinçonnage avec enlèvement de matière et, enfin, la jante fabriquée dans un procédé de fabrication séparé est reliée à la coque (5), caractérisé en ce que, pour former l'oeillet de raccordement (1', 1") en diminuant le volume de matière à poinçonner pour le renfoncement (2, 23) par un pressage et un emboutissage optimisés pour un maintien variable simultané opposé, la matière est déplacée par refoulement ultérieur du renfoncement (2, 23) dans la zone adjacente et la matière est également pressée axialement vers l'intérieur pàr pressage axial supplémentaire.
